# EUROPÄISCHE PATENTSCHRIFT

(11) **EP 0 795 109 B1**
(45) Veröffentlichungstag und Bekanntmachung des Hinweises auf die Patenterteilung: **26.05.1999**
(21) Anmeldenummer: 95941080.4
(22) Anmeldetag: 08.12.1995
(51) Int. Cl.: F24D 11/00, F24H 9/12

(54) **WARMWASSERBEREITER**
WATER HEATER
CHAUFFE-EAU

(30) Priorität: 09.12.1994 DE 4443715
(43) Veröffentlichungstag der Anmeldung: 17.09.1997
(73) Patentinhaber: SOLVIS Solarsysteme GmbH, 38122 Braunschweig (DE)
(72) Erfinder: JÄGER, Helmut, D-38533 Vordorf (DE); TERSCHÜREN, Klaus-Henning, D-38173 Evessen (DE); VIERTEL, Uwe, D-38106 Braunschweig (DE)
(74) Vertreter: Einsel, Martin, Dipl.-Phys.
(86) Internationale Anmeldenummer: EP9504835
(87) Internationale Veröffentlichungsnummer: WO9618072

(56) Entgegenhaltungen:
- EP-A- 0 199 369
- EP-A- 0 384 423
- AT-A- 382 454
- DE-A- 2 947 995
- DE-A- 4 301 723
- DE-U- 9 315 785
- FR-A- 2 257 870
- FR-A- 2 512 525
- NL-A- 9 101 501

## Beschreibung

Die Erfindung bezieht sich auf einen Warmwasserbereiter mit einem mit Wasser gefüllten Speichergefäß mit einer äußeren Wärmeisolierung, Anschlüssen für den Vor- und Rücklauf einer Solarkollektoranlage einerseits und einer Warmwasserraumheizung andererseits, einer im Speichergefäß liegenden Brennkammer, einer Gas- oder Ölfeuerung und einem Durchflußwärmetauscher für Brauchwasser.

Bekannte Warmwasserbereiter für Heiz- und Brauchwasser stellen Kombinationen von Solar- und mit Brennstoffen beheizten Geräten dar, wobei nur geringe synergistische Effekte erzielt werden. So wird bei bekannten Warmwasserbereitern das warme Rücklaufwasser einer Solaranlage im Bodenbereich des Kessels eingespeist, wobei im Kessel oberhalb dieses Bodenbereiches die Brennkammer einer Öl- oder Gasfeuerung angeordnet ist und darüber wieder direkt in den Innenraum führende Anschlüsse für Vor- und Rücklauf der Warmwasserraumheizung. Im obersten Bereich des Flüssigkeitsraumes befinden sich die Durchlauferhitzer für das Brauchwasser. In einer solchen Anlage kommt es zu einer Vermischung des von der Solaranlage oft mit hoher Temperatur zugeführten Heißwassers mit dem im Warmwasserbereiter vorhandenen Wasser. Damit kommt es zu einer äußerst starken Reduzierung der Exergie des aus der Solaranlage zugeführten Heißwassers und damit zu einem insgesamt niedrigen energetischen Wirkungsgrad.

Um diese Nachteile zu vermeiden, ist es bei rein solarbeheizten Warmwasserbereitern bekannt, das zugeführte Wasser entsprechend seiner Temperatur geschichtet (warmes Wasser oben, kaltes Wasser unten) abzulegen, wie beispielsweise in der EP 0 384 423 B1 beschrieben. Bei solchen Anlagen kommt es zu einer Temperaturabsenkung nur in den Gebieten, in denen beispielsweise über einen Brauchwasserwärmetauscher tatsächlich Wärmeenergie entzogen wird.

Die DE-U-9 315 785 offenbart einen Warmwasserbereiter mit einem mit Wasser gefüllten Speichergefäß, mit einer äußeren Wärmeisolierung, Anschlüssen für den Vor- und Rücklauf einer Solarkollektoranlage einerseits und dem Vor- und Rücklauf einer Warmwasserraumheizung andererseits, einer im Speichergefäß liegenden Brennkammer einer Gas- oder Ölfeuerung und einem Durchflußwärmetauscher für Brauchwasser.

Die DE 43 01 723 A1 zeigt einen Warmwasser-Schichtenspeicher mit einer Solaranlage, bei dem im oberen Drittel des Speicherraumes eine Rohrwendel angeordnet ist, die von einer konventionellen Heizeinrichtung, z. B. von einem Heizkessel für fossile Brennstoffe, gespeist wird.

Bei Warmwasser-Schichtenspeichern ist es bekannt, innerhalb des Schichtenspeichers einen Gegenstromwärmetauscher zur Erwärmung von Brauchwasser anzuordnen, der mit dem Thermo-Syphon-Prinzip betrieben wird (EP 0 578 126 A2).

Solarbetriebene Anlagen haben den Nachteil, daß sie in Zeiten des größten Wärmebedarfs die geringste thermische Leistung erbringen.

Aufgabe der Erfindung ist es, einen Warmwasserbereiter aufzuzeigen, der in exergetisch optimierter Weise mit solarbeheiztem Wasser wie auch durch eine Feuerung beheizt werden kann.

Diese Aufgabe wird gemäß der Erfindung gelöst durch einen Warmwasserbereiter mit den Merkmalendes Patentanspruchs 1.

Zweckmäßige Ausgestaltungen sind Gegenstand der Unteransprüche.

Die Anordnung der Brennkammer einschließlich deren Abgasleitung bei Brennwertausführung der Feuerung im oberen Drittel führt zu einem hohen exergetischen Wirkungsgrad. Eine geringe Menge des Wassers im oberen Bereich des Speichergefäßes, die zudem die höchste Temperatur auch ohne Brennerbetrieb hat, wird schnell auf die Vorlauftemperatur des Wärmetauschers bzw. des Heizkreises gebracht und auf dieser Temperatur gehalten, also dort, wo die Wärme abgezogen wird. Durch die Aufheizung des Wassers in der Schichtung mit der höchsten Wassertemperatur konnte es beim Betrieb des Brenners zu keiner thermal bedingten Wirbelbildung in den darunterliegenden Schichten niedrigerer Temperatur kommen. Deren Exergie wird also auch bei Brennerbetrieb erhalten und steigt daher mit der Ablagetemperatur zum oberen Bereich des Vorratsgefäßes. Das gesamte Wasservolumen des Speichergefäßes steht zur Speicherung der von der Solaranlage gelieferten Wärme zur Verfügung.

Die Erfindung ist in der Zeichnung beispielsweise veranschaulicht und im nachstehenden im einzelnen anhand der Zeichnung beschrieben, die im Längsschnitt schematisch zwei Varianten für den Aufbau des erfindungsgemäßen Warmwasserbereiters darstellt.

Figur 1 zeigt eine erste Ausführungsform.

Figur 2 zeigt eine zweite Ausführungsform.

Der Warmwasserbereiter 2 weist ein Speichergefäß 4 mit einem vorzugsweise zylindrischen Rumpf 6 auf, dessen Höhe größer ist als der Durchmesser. Das Verhältnis von Höhe zu Durchmesser liegt dabei beispielsweise im Bereich von 2 : 1 oder 3 : 1. Das Speichergefäß 4 ist außen mit einer Isolierung 8 versehen, deren Wärmedämmung so ausgelegt ist, daß praktisch keine Wärmeverluste über die Wandung des Speichergefäßes auftreten. Das Speichergefäß kann in der bei rein solarbeheizten Speichern üblichen Größe beispielsweise für 300 1 oder 600 1 Wasser ausgelegt sein.

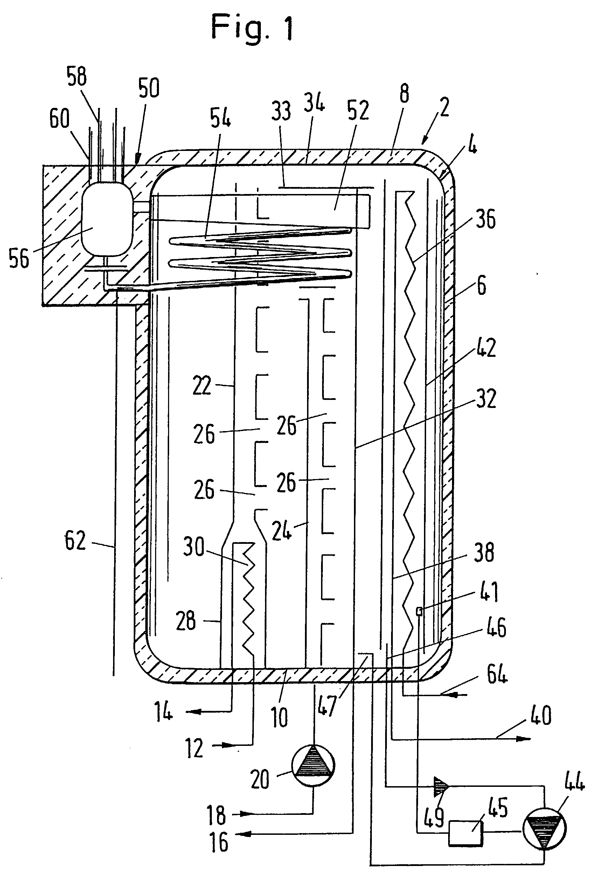

Der Boden 10 des Speichergefäßes ist vorzugsweise lösbar. Im Behälterboden sind übliche Anschlüsse für die Vor- und Rückläufe für eine Solarkollektoranlage, eine Heizungsanlage und bei der Ausführung nach Figur 1 auch für eine Brauchwasseranlage angeordnet, die im einzelnen nicht dargestellt sind. Die in der Zeichnung nicht dargestellten Solarkollektoren sind durch ihren Vorlauf 12 und ihren Rücklauf 14 repräsentiert, und die ebenfalls nicht dargestellte Warmwasserraumheizung durch ihren Vorlauf 16 und ihren Rücklauf 18 sowie eine Umwälzpumpe 20. Im Inneren des Speichergefäßes 4 sind einerseits für das Wasser aus dem Rücklauf der Solarkollektoren und andererseits für den Rücklauf des Heizungswassers senkrechte Rohre 22, 24 vorgesehen, die zum temperaturabhängigen Einschichten des Vorlaufwassers der Solarkollektoranlage und des Rücklaufwassers der Raumheizung andererseits ausgebildet sind. Vorzugsweise sind die Einschichtungsrohre jeweils mit seitlich mit Abstand übereinander angeordneten Auslässen 26 mit Ventilklappen (nicht dargestellt) versehen, die in Abhängigkeit von der Differenz der Dichte und damit der Temperaturdifferenz des Wassers in dem Einschichtungsrohr und im Speichergefäß in Höhe des jeweiligen Anschlusses öffnen bzw. schließen. Einzelheiten einer solchen Anordnung zur temperaturkonformen Einschichtung des Warmwassers sind in der EP 0 384 423 B1 beschrieben.

Für den Solarkreis ist im unteren Bereich des Einschichtungsrohres 22 ein Rohrabschnitt 28 dargestellt, der einen größeren Durchmesser hat und in dem ein Wärmetauscher für den Solarkreis angeordnet ist. Ein solcher Wärmetauscher 30 ist zweckmäßig, wenn der Solarkreis mit Frostschutz betrieben werden muß. Er kann entfallen, wenn auch der Heizungskreis mit Frostschutz betrieben wird.

Für den Heizungskreis führt dessen Rücklauf 18 in das Einschichtungsrohr 24. Das Rücklaufwasser der Heizung wird daher ebenfalls entsprechend seiner jeweiligen Temperatur in dem Speichergefäß in der dieser Temperatur entsprechenden Schicht abgelegt.

Der Vorlauf 16 des Heizungskreises ist innerhalb des Gefäßes mit einem Rohr 32 bis kurz unterhalb des oberen Bodens 34 geführt. Damit wird für den Heizungskreis das Vorlaufwasser jeweils aus dem Bereich der höchsten Wassertemperatur im Speichergefäß abgezogen. Das Rohr 32 kann mit einem flächigen Einlauf 33 versehen sein, um eine Wirbelbildung durch die Querströmung des abgezogenen Wassers klein zu halten.

Bei der Ausführung nach Figur 1 ist für Brauchwassererwärmung ein Kaltwasservorlauf 64 innerhalb des Gefäßes an einen senkrecht im Gefäß angeordneten Wärmetauscher 36 angeschlossen, der sich im wesentlichen über die gesamte Höhe des Speichergefäßes erstreckt und mit seinem Auslaß 38 über einen hier ebenfalls im Boden des Speichergefäßes angeordneten Anschluß an den Brauchwasservorlauf 40 angeschlossen ist. Der Wärmetauscher 36 ist in einem Führungsrohr 42 angeordnet, das sich vom Bereich unterhalb des oberen Bodens 34 des Speichergefäßes bis zum Bereich oberhalb des unteren Bodens 10 erstreckt und an seinen beiden Enden offen ist. Durch dieses Führungsrohr 42 wird nach dem Thermo-Syphon-Prinzip eine Abwärtsströmung des Wassers in dem Führungsrohr bis in Bodennähe erzwungen. Der Wärmetauscher 36 und das Führungsrohr 42 sind zweckmäßig so ausgelegt, daß am unteren Ende das im Führungsrohr abwärts strömende Warmwasser bis annähernd auf die Eintrittstemperatur des Kaltwassers abgekühlt ist. Das in dem Führungsrohr abwärts strömende und durch den Wärmetausch abgekühlte Wasser schichtet sich damit im Bodenbereich des Speichergefäßes in das Speicherwasser ein.

Falls die natürliche Thermo-Syphon-Wirkung im Führungsrohr für die Erwärmung des Brauchwassers im Wärmetauscher nicht ausreichen sollte, kann eine temperaturgesteuerte Wasserförderung durch das Führungsrohr 42 erzwungen werden, beispielsweise über eine Pumpe 44 mit einem Saugrohrende 46 im unteren Bereich des Führungsrohres 42 und einem seitlich gegen das Führungsrohr versetzten Auslaß 47 in Bodennähe, über dem beispielsweise ein Prallblech zur Vermeidung von Wirbelbildung angeordnet sein kann. Die Pumpe 44 wird über einen temperaturgesteuerten Regler 45 mit einem Temperaturfühler 41 im unteren Bereich des Führungsrohres 42 in Abhängigkeit von der Temperatur des abwärts strömenden Wassers im unteren Bereich des Führungsrohres gesteuert.

Der Durchfluß kann auch über das temperaturgesteuerte Ventil 49 so geregelt sein, daß die Temperatur am Wärmetauscherausgang 46 nur gering - zum Beispiel 5 Kelvin - über der Kaltwassertemperatur 64 liegt.

Falls der Wärmetauscher so ausgelegt ist, daß über die Pumpe ständig Wasser mit einer höheren Temperatur abgesaugt wird, kann die Pumpe auch an den Rücklauf 18 des Heizungskreises angeschlossen und damit das Wasser temperaturgerecht in das Speichergefäß eingeschichtet werden.

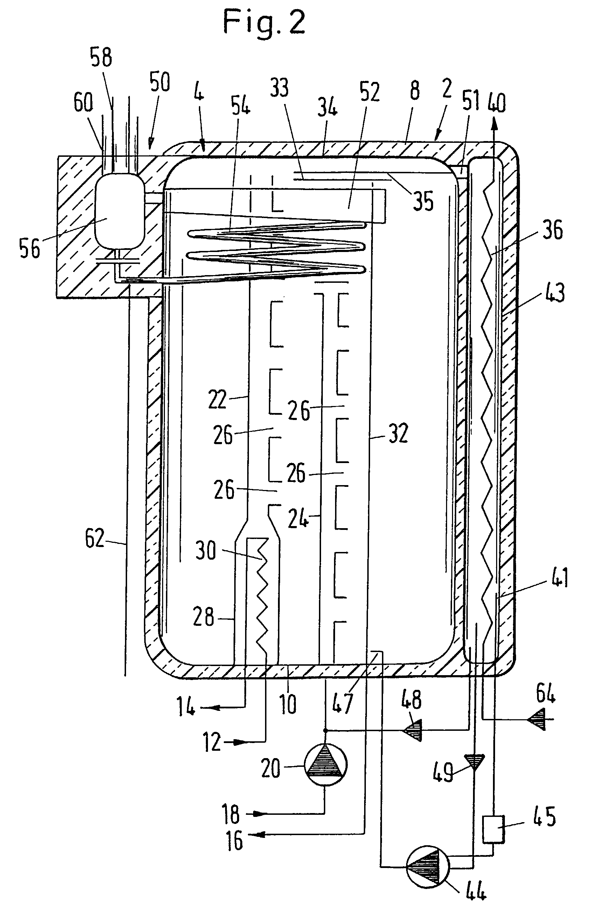

Bei der Ausführungsform nach Figur 2 ist das den Wärmetauscher 36 für das Brauchwasser einschließende Führungsrohr 43 als geschlossenes Gefäß außerhalb des Speichergefäßes parallel zu dessen Rumpfwandung angeordnet. Der Vorlauf 64 des Kaltwassers ist hier durch den Boden des Führungsrohres an den Einlaß des Wärmetauschers 36 angeschlossen, dessen Warmwasservorlauf am oberen Ende durch die Wandung geführt ist. Es entfällt also die parallel zum Wärmetauscher nach unten zum Gefäßboden hin verlaufende Vorlaufleitung in der Ausführungsform nach Figur 1.

Das geschlossene Führungsrohr hat im Bereich seines oberen Endes eine Verbindung 51 zum Speichergefäß 4. Eine ähnliche Verbindung kann im unteren Bereich des Führungsrohres 43 vorgesehen werden. Auch die Verbindung kann im Speichergefäß mit einem flächigen Einlauf 35 versehen sein. Bei einer Ausgestaltung, bei der durch Wärmetausch nur eine teilweise Abkühlung des abwärts strömenden Warmwassers erreicht wird oder werden soll, kann der Auslauf am unteren Ende des Führungsrohrs an den Rücklauf des Heizungskreises angeschlossen werden, und zwar über ein Rückschlagventil 48, das einen Nebenschluß beim Betrieb der Pumpen 20 des Heizungskreises durch eine Förderung von Wasser aus dem Rücklauf des Heizungskreises in das Führungsrohr 43 verhindert. Auch bei der Ausführung nach Fig.2 kann ein Zwangsumlauf durch eine temperaturgesteuerte Pumpe 44 mit Temperaturfühler 41 und einer elektrischen Schalteinheit 45 vorgesehen werden. Im Pumpenkreis kann ein Ventil 49 vorgesehen werden, mit dem unerwünschte Strömungen im Pumpenkreis unterbunden werden.

Das Führungsrohr 43 ist gegen den Mantel des Speichergefäßes isoliert oder über eine Verbindung mit niedrigem Wärmeübergangskoeffizienten angeschlossen, vorzugsweise aber insgesamt in die Isolierung 8 des Speichergefäßes eingeschlossen.

In die Isolierung sollte dabei auch der Pumpenkreislauf mit der Pumpe, gegebenenfalls dem Ventil 48 und den zugehörigen Leitungen eingeschlossen sein.

Heizwarmwasser für den Heizungskreis wird im wesentlichen in Zeiten benötigt, in denen die Wärmezufuhr aus der Solaranlage gering ist, also während der sogenannten Heizperiode. Um über den Wasserbereiter auch in diesen Zeiten das notwendige Warmwasser für die Heizungsanlage und die Brauchwassererwärmung bereitzustellen, ist eine Gas- oder Ölfeuerung 50 vorgesehen, deren Brennkammer 52 im oberen Bereich des Speichergefäßes innerhalb des Speichergefäßes angeordnet ist. Die Feuerung 50 ist vorzugsweise als Brennwertfeuerung ausgebildet. Zu diesem Zweck ist die Abgasleitung der Brennkammer unterhalb der Brennkammer 52 im Wasserraum des Speichergefäßes nach unten geführt, so daß die Temperatur des Abgases durch Wärmetausch mit dem Wasser so weit wie möglich abgesenkt wird. Die Feuerung wird eingeschaltet, wenn eine vorbestimmte Temperatur des Speicherwassers im oberen Speicherbereich unterschritten wird. Dann steht aufgrund der Temperaturschichtung im oberen Drittel für die Abgasleitung im allgemeinen ein hinreichend großes Temperaturgefälle für die Abkühlung der Abgase bis in die Nähe des Taupunktes oder sogar unter den Taupunkt zur Verfügung.

In Figur 1 ist als Beispiel eine wendelförmige Abgasleitung 54 dargestellt, deren Auslaß etwa in Höhe von 2 / 3 bis 3 / 4 der Speichergefäßhöhe durch die Wandung des Speichergefäßes geführt ist. Eine kompakte Bauweise kann erreicht werden, wenn die Abgasleitung unterhalb der Brennkammer an diese angegossen wird und damit mit dieser aus einem Stück besteht. Die Brennkammer und die Abgasleitung sind mit Rippen zur Erzielung eines optimalen Wärmetausches mit dem Wasser im Speicher versehen.

Die Feuerung 50 ist in der Zeichnung beispielsweise mit einem Gebläsebrenner 56 dargestellt, mit einer Frischluftzufuhr 58, die koaxial innerhalb einer Leitung 60 angeordnet ist, durch die abgekühltes Abgas geführt werden kann und dabei die Frischluft vorwärmt. Das sich aus dem Abgas durch die Abkühlung abscheidende Kondensat wird über eine Kondensatleitung 62 abgeführt.

Der Brenner 56 wird in Abhängigkeit von der Temperatur des Wassers im oberen Drittel des Speichergefäßes ein- bzw. ausgeschaltet. Der Brenner ist vorzugsweise für die maximal für die Brauchwassererwärmung benötigte Wärmeleistung ausgelegt, die bei entsprechend der Wärmeverordnung wärmegedämmten Ein- oder Zweifamilienhäusern die für die Raumheizung aufzubringende Wärmeleistung übersteigt oder doch zumindest dieser im wesentlichen entspricht. Bei üblicher Vorrangschaltung für die Brauchwasserentnahme kommt es bei der Brauchwassererwärmung zu langen Brennereinschaltzeiten. Lange Einschaltzeiten werden dann auch bei der Heizungswassererwärmung erreicht. Lange Brennereinschaltzeiten bedeuten neben der Wirtschaftlichkeit auch einen umweltverträglichen Brennerbetrieb.

Durch die beschriebene Anordnung der Brennkammer im oberen Bereich des Speichergefäßes wird nach dem Einschalten des Brenners ein schneller Anstieg der Wassertemperatur in diesem Bereich des Speichergefäßes und damit für die Vorläufe des Brauchwassers bzw. der Heizungswasserkreise erreicht. Das Rücklaufwasser des Heizungskreises hat eine vom Wärmebedarf und damit im wesentlichen von der Außentemperatur bedingte Temperaturdifferenz zum Vorlaufwasser und wird in entsprechender Höhe in das Speichergefäß eingeschichtet. Sein Wärmeinhalt gelangt dann ohne Exergieverluste in den Heizbereich des Brenners und gegebenenfalls seiner Abgasleitung.

## Patentansprüche

1. Warmwasserbereiter mit
einem mit Wasser gefüllten Speichergefäß (4), mit
einer äußeren Wärmeisolierung,
Anschlüssen für den Vor- (12) und Rücklauf (14) einer Solarkollektoranlage einerseits und dem Vor-(16) und Rücklauf (18) einer Warmwasserraumheizung andererseits,
einer im Speichergefäß liegenden Brennkammer (52) einer Gas- oder Ölfeuerung (50) und
einem Durchflußwärmetauscher (36) für Brauchwasser,
**gekennzeichnet durch**
eine Vorrichtung (22) zum temperaturabhängigen Einschichten des Vorlaufwassers der Solarkollektoranlage im Speicherraum (2),
eine Vorrichtung (24) zum temperaturabhängigen Einschichten des Rücklaufwassers der Raumheizung im Speichergefäß,
die Anordnung des Einlaufes (33) des Vorlaufs (16) der Raumheizung im Bereich des oberen Bodens (34) des Speichergefäßes, und
die Anordnung der Brennkammer (52) im oberen Bereich des Speicherraumes.

2. Warmwasserbereiter nach Anspruch 1,
**gekennzeichnet durch** die Ausbildung der Feuerung als Brennwertfeuerung mit einer unterhalb der Brennkammer (52) innerhalb des Speichergefäßes (4) in dessen oberem Drittel angeordneten Abgasführung (54).

3. Warmwasserbereiter nach Anspruch 2,
**gekennzeichnet durch** ein als Schraubenwendel ausgebildetes Abgasrohr (54), das vom Ausgang der Brennkammer (52) im oberen Drittel des Speichergefäßes nach unten durch den Speicherinnenraum verläuft.

4. Warmwasserbereiter nach Anspruch 2,
**dadurch gekennzeichnet,** daß die Abgasführung über Abstandshalter an die Brennkammer (52) angegossen ist.

5. Warmwasserbereiter nach Anspruch 1,
**dadurch gekennzeichnet,**
daß die Vor- und Rücklaufanschlüsse (12,14,16,18) der Solaranlage und der Raumheizung im unteren Boden (10) des Speichergefäßes (4) angeordnet sind, der mit dem Speichergefäß lösbar verbunden ist.

6. Warmwasserbereiter nach Anspruch 1,
**dadurch gekennzeichnet,**
daß die Wassereinschichtungsvorrichtungen (22,24) jeweils eine im Speicherinnenraum (4) senkrecht angeordnete rohrförmige Führung für das eingespeiste Wasserrohr aufweisen, welches mit in Abständen übereinander angeordneten Auslässen (26) mit Klappenventilen versehen ist, die in den Speicherinnenraum (4) öffnen.

7. Warmwasserbereiter nach Anspruch 6,
**dadurch gekennzeichnet,**
daß Vor- (12) und Rücklauf (14) der Solarkollektoranlage an einen Wärmetauscher (30) angeschlossen sind, der innerhalb der rohrförmigen Führung (22) in dessen unterem Bereich angeordnet ist.

8. Warmwasserbereiter nach Anspruch 1,
**dadurch gekennzeichnet,**
daß eine senkrechte Anordnung des Wärmetauschers (36) für das Brauchwasser in einem senkrechten Führungsrohr (42, 43) vorgesehen ist, das in seinem oberen und unteren Bereich mit dem Wasser im Bereich des oberen (34) bzw. unteren Bodens (10) des Speichergefäßes in Verbindung steht.

9. Warmwasserbereiter nach Anspruch 8,
**dadurch gekennzeichnet,**
daß das Führungsrohr (42) mit dem darin angeordneten Wärmetauscher (36) innerhalb des Speichergefäßes (4) angeordnet und das Führungsrohr (42) an seinem unteren und oberen Ende in Abstand vom oberen bzw. unteren Boden (10,34) des Speichergefäßes offen ist.

10. Warmwasserbereiter nach Anspruch 8,
**dadurch gekennzeichnet,**
daß das Führungsrohr (43) mit einer Wärmeisolierung versehen außen am Speichergefäß (4) angeordnet und oben und unten an das Speichergefäß angeschlossen ist.

11. Warmwasserbereiter nach Anspruch 10,
**dadurch gekennzeichnet,**
daß das Führungsrohr innerhalb der Wärmeisolierung (8) des Speichergefäßes (4) gegen das Speichergefäß isoliert angeordnet ist.

12. Warmwasserbereiter nach Anspruch 10,
**dadurch gekennzeichnet,**
daß der Kaltwasservorlauf (64) des Wärmetauschers (36) am unteren Ende des Führungsrohres (43) und der Warmwasservorlauf (40) an dessen oberen Ende angeordnet ist.

13. Warmwasserbereiter nach einem der Ansprüche 9 bis 12,
**gekennzeichnet durch** einen in Abhängigkeit von der Wasserentnahme einschaltbaren Zwangsumlauf des durch das Führungsrohr (42) abwärts strömenden Wassers mit einem im unteren Bereich des Führungsrohrs (42) mündenden Ansaugrohr, einer temperaturgesteuerten (45) Umwälzpumpe (44) und einer in Bodennähe im Speichergefäß mündenden Auslaßleitung (47) für das von der Umwälzpumpe geförderte Wasser.

14. Warmwasserbereiter nach Anspruch 13,
**dadurch gekennzeichnet,**
daß im unteren Bereich des Führungsrohres (42, 43) ein Temperaturfühler für die Temperatursteuerung (45) der Umwälzpumpe (44) vorgesehen ist.

15. Warmwasserbereiter nach einem der Ansprüche 10 bis 14,
**dadurch gekennzeichnet,**
daß das untere Ende des Führungsrohres über ein Rückschlagventil (48) an den Speicherbehälter angeschlossen ist.

16. Warmwasserbereiter nach einem der Ansprüche 10 bis 15,
**dadurch gekennzeichnet,**
daß das untere Ende des Führungsrohres an den Rücklauf (18) der Raumheizung angeschlossen ist.

## Claims

1. Water heater with a storage tank (4), which is filled with water, with outer thermal insulation, connections for the feed (12) and return (14) of a solar collector plant on one side and the feed (16) and return (18) of a warm water space heating system on the other, a combustion chamber (52), located in the storage tank, of a gas or oil heating system (50), and a continuous flow heat exchanger (36) for water to be used,
characterised by a device (22) for the temperature-dependent stratification of the feed water of the solar collector plant in the storage space (2), a device (24) for the temperature-dependent stratification of the return water of the space heating system in the storage tank, the arrangement of the inlet (33) of the feed (16) of the space heating system in the region of the upper deck (34) of the storage tank, and the arrangement of the combustion chamber (52) in the upper region of the storage space.

2. Water heater according to claim 1,
characterised by the formation of the heating system as a high efficiency heating system with gas exhaust means (54) arranged below the combustion chamber (52) inside the storage tank (4) in the upper third thereof.

3. Water heater according to claim 2,
characterised by an exhaust-gas pipe (54) which is formed as a coil and extends downwards through the interior storage space from the exit of the combustion chamber (52) in the upper third of the storage tank.

4. Water heater according to claim 2,
characterised in that the gas exhaust means is integrally cast with the combustion chamber (52) via spacers.

5. Water heater according to claim 1,
characterised in that the feed an return connections (12, 14, 16, 18) of the solar plant and the space heating system are arranged in the lower deck (10) of the storage tank (4), which floor is detachably connected thereto.

6. Water heater according to claim 1,
characterised in that the water stratification devices (22, 24) each compromise a tubular guide, which is arranged vertically in the interior storage space (4), for the water pipe which is fed in and which is provided with outlets (26), arranged at spacings above one another, with flap valves which open into the interior storage space (4).

7. Water heater according to claim 6,
characterised in that the feed (12) and return (14) of the solar collector plant are connected to a heat exchanger (30) which is arranged inside the tubular guide (22) in the lower region thereof.

8. Water heater according to claim 1,
characterised in that a vertical arrangement of the heat exchanger (36) for the water to be used is provided in a vertical guide tube (42, 43) which communicates in its upper and lower region with water in the region of the upper deck (34) and lower deck (10), respectively, of the storage tank.

9. Water heater according to claim 8,
characterised in that the guide tube (42) with the heat exchanger (36) arranged therein is arranged inside the storage tank (4), and the guide tube (42) is open at its lower and upper end at a spacing from the upper and lower deck (10, 34), respectively, of the storage tank.

10. Water heating according to claim 8,
characterised in that the guide tube (43), provided with thermal insulation, is arranged on the outside of the storage tank (4) and connected thereto at the top and bottom.

11. Water heater according to claim 10,
characterised in that the guide tube is arranged inside the thermal insulation (8) of the storage tank (4) so as to be insulated with respect to the storage tank.

12. Water heater according to claim 10,
characterised in that the cold water feed (64) of the heat exchanger (36) is arranged at the lower end of the guide tube (43) and the warm water feed (40) is arranged at the upper end thereof.

13. Water heater according to any one of claims 9 to 12,
characterised by a forced circulation of the water flowing downwards through the guide tube (42) which can be brought into operation in accordance with the water extraction, with a suction pipe opening out in the lower region of the guide tube (420, a temperature-controlled (45) circulation pump (44) and an outlet line (47), which opens out in the vicinity of the floor in the storage tank, for the water delivered by the circulation pump.

14. Water heater according to claim 13,
characterised in that a temperature sensor for the temperature control (45) of the circulation pump (44) is provided in the lower region of the guide tube (42, 43).

15. Water heater according to any one of claims 10 to 14,
characterised in that the lower end of the guide tube is connected to the storage tank via a non-return valve (48).

16. Water heater according to any one of claims 10 to 15,
characterised in that the lower end of the guide tube is connected to the return (18) of the space heating system.

## Revendications

1. Chauffe-eau comportant un réservoir (4) rempli d'eau, une isolation thermique extérieure, des branchements pour la conduite d'aller (12) et la conduite de retour (14) d'une installation de collecteur solaire d'une part et la conduite d'aller (16) et la conduite de retour (18) d'un chauffage central à eau chaude d'autre part, une chambre de combustion (52) située dans le réservoir et destinée à un foyer à gaz ou à fioul (50) et un échangeur thermique à circulation (36) pour l'eau sanitaire, caractérisé en ce qu'il est prévu un dispositif (22) pour disposer une couche, en fonction de la température, de l'eau d'aller de l'installation de collecteur solaire dans le réservoir (2), un dispositif (24) pour disposer une couche, en fonction de la température, de l'eau de retour du chauffage dans le réservoir, l'agencement de l'admission (33) de la conduite d'aller (16) du chauffage dans la zone du fond supérieur (34) du réservoir et l'agencement de la chambre de combustion (52) dans la zone supérieure du réservoir.

2. Chauffe-eau selon la revendication 1, caractérisé en ce que le foyer est réalisé comme foyer à condensation avec une conduite de gaz d'évacuation (54) disposée au-dessous de la chambre de combustion (52) à l'intérieur du réservoir (4) dans le tiers supérieur dudit réservoir.

3. Chauffe-eau selon la revendication 2, caractérisé en ce qu'il est prévu une conduite de gaz d'évacuation (54) qui est conçue comme une spirale hélicoïdale et traverse vers le bas l'intérieur du réservoir à partir de la sortie de la chambre de combustion (52) dans le tiers supérieur du réservoir.

4. Chauffe-eau selon la revendication 2, caractérisé en ce que la conduite de gaz d'évacuation est coulée contre la chambre de combustion (52) au-dessus des pièces d'écartement.

5. Chauffe-eau selon la revendication 1, caractérisé en ce que les branchements des conduites d'aller et de retour (12, 14, 16, 18) de l'installation solaire et du chauffage central sont disposés dans le fond inférieur (10) du réservoir (4), le fond étant assemblé de manière amovible avec ledit réservoir.

6. Chauffe-eau selon la revendication 1, caractérisé en ce que les dispositifs de disposition de couches d'eau (22, 24) présentent respectivement une conduite tubulaire, disposée verticalement dans l'intérieur du réservoir (4), destinée au tube d'eau d'alimentation et dotée de sorties (26) disposées à distance l'une au-dessus de l'autre, munies de vannes à clapet et débouchant dans l'intérieur du réservoir (4).

7. Chauffe-eau selon la revendication 6, caractérisé en ce que la conduite d'aller (12) et la conduite de retour (14) de l'installation du collecteur solaire sont branchées sur un échangeur thermique (30) qui est disposé à l'intérieur de la conduite (22) tubulaire dans la partie inférieure dudit échangeur.

8. Chauffe-eau selon la revendication 1, caractérisé en ce qu'il est prévu une disposition verticale de l'échangeur thermique (36) pour l'eau sanitaire dans un tube guide (42, 43) vertical qui, dans sa partie supérieure et sa partie inférieure, est relié à l'eau de la zone du fond supérieur (34) respectivement du fond inférieur (10) du réservoir.

9. Chauffe-eau selon la revendication 8, caractérisé en ce que le tube guide (42) est disposé avec l'échangeur thermique (36) qui y est disposé, à l'intérieur du réservoir (4) et en ce que le tube guide (42) est ouvert à son extrémité inférieure et à son extrémité supérieure, à distance du fond supérieur respectivement inférieur (10, 34) du réservoir.

10. Chauffe-eau selon la revendication 8, caractérisé en ce que le tube guide (43) est muni d'une isolation thermique, disposé à l'extérieur sur le réservoir (4) et raccordé en haut et en bas au réservoir.

11. Chauffe-eau selon la revendication 10, caractérisé en ce que le tube guide est disposé à l'intérieur de l'isolation thermique (8) du réservoir (4) et isolé du réservoir.

12. Chauffe-eau selon la revendication 10, caractérisé en ce que la conduite d'aller d'eau froide (64) de l'échangeur thermique (36) est disposée à l'extrémité inférieure du tube guide (43) et en ce que la conduite d'aller d'eau chaude (40) à son extrémité supérieure.

13. Chauffe-eau selon l'une quelconque des revendications 9 à 12, caractérisé en ce qu'il est prévu une circulation forcée - pouvant être mise en marche en fonction du prélèvement de l'eau - de l'eau descendant à travers le tube guide (42) avec un tube d'aspiration débouchant dans la partie inférieure du tube guide (42), une pompe de circulation (44) commandée par la température (45) et une conduite d'évacuation (47) débouchant à proximité du fond dans le réservoir et destinée à l'eau transportée par la pompe de circulation.

14. Chauffe-eau selon la revendication 13, caractérisé en ce que, dans la zone inférieure du tube guide (42, 43), il est prévu un capteur de température pour la commande de température (45) de la pompe de circulation (44).

15. Chauffe-eau selon l'une quelconque des revendications 10 à 14, caractérisé en ce que l'extrémité inférieure du tube guide est raccordée au réservoir par l'intermédiaire d'une soupape de retenue (48).

16. Chauffe-eau selon l'une quelconque des revendications 10 à 15, caractérisé en ce que l'extrémité inférieure du tube guide est raccordée à la conduite de retour (18) du chauffage.
